(19)

Europäisches
Patentamt

European
Patent Office

Office européen
des brevets

(11)  EP 3 188 096 A1

(12)  EUROPEAN PATENT APPLICATION

(43) Date of publication:
05.07.2017  Bulletin 2017/27

(51) Int Cl.:
*G06Q 10/06* (2012.01)

(21) Application number: 16002729.8

(22) Date of filing: 22.12.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority:  28.12.2015  US 201514980990

(71) Applicant: SAP SE
69190 Walldorf (DE)

(72) Inventors:
• Wang, Mengjiao
69190 Walldorf (DE)
• LI, Wen-Syan
69190 Walldorf (DE)

(74) Representative: Müller-Boré & Partner
Patentanwälte PartG mbB
Friedenheimer Brücke 21
80639 München (DE)

(54)  DATA ANALYSIS FOR PREDICTIVE SCHEDULING OPTIMIZATION FOR PRODUCT PRODUCTION

(57)  At least one human resource sufficient to fulfill a received production order may be retrieved from a human resources database in which individual human resources are characterized based on skill level, efficiency level, cost, and schedule availability. At least one machine resource sufficient to fulfill the production order may be retrieved from a machine resources database in which individual machine resources are characterized based on production level, machine availability, and cost. Sufficient inventory materials to fulfill the production order may be retrieved from an inventory database in which inventory materials are characterized based on inventory availability and cost. A linear programming model may be executed to define a production schedule using at least one selected human resource selected from the at least one human resource, at least one selected machine resource from the at least one machine resource, and selected inventory materials from the sufficient inventory materials to complete the production order by a production deadline.

FIG.1

EP 3 188 096 A1

**Description**

**TECHNICAL FIELD**

This description relates to data analysis for predictive scheduling.

**BACKGROUND**

High volumes of data are captured, stored, and available for use in various types of decision-making. However, it is often difficult or impossible for human users of such data to interpret and apply the data, and to engineer computers to operate based on the data and in a manner that optimizes use of the available data.

Computers are often used in various types of scheduling operations, and many such scheduling operations are straightforward. In some contexts, however, it is still difficult or impossible to make large-scale, accurate, and/or timely scheduling decisions, particularly when certain scheduling constraints exist, and/or when a large number of scheduling variables are present.

For example, some scheduling data relates to production environments, such as production environments for transforming raw goods into consumer products. For example, some production environments have intra-dependencies, since, e.g., a given production operation may depend upon successful completion of preceding operations.

Moreover, such production scheduling may be heavily dependent upon controlling an appropriate scheduling of human and machine resources involved in the production environment. For example, employees may have widely-varying skill sets, and efficiency levels that vary by person, as well as by individual skill.

Consequently, scheduling the deployment of human and machine resources is often done in a manner that results in inefficient use of such resources. Moreover, difficulty in such scheduling can result in failure to successfully complete a production order by a required deadline, resulting in loss of profit and reputation for the producer.

**SUMMARY**

The present description provides data analysis to predict and control production schedules. The data analysis relies on available data characterizing the available raw materials, machine resources (e.g., maintenance requirements and available capacity levels for production machinery), and human resources (e.g., varying skill sets and efficiency levels of individual employees with respect to individual relevant skills), as well as intra-production process dependencies, and other production factors.

The present description relates to the generation and use of an enhanced linear programming model to consider the above and other factors in optimizing a production schedule and other production characteristics. Using these and related techniques, it is possible to achieve a global manufacturing schedule for given conditions, notwithstanding the above variables. Further, it is possible to predict a risk level of accepting production orders, given corresponding, predicted potential delays in production that may occur.

According to one general aspect, a computer program product is tangibly embodied on a non-transitory computer-readable storage medium and includes instructions that, when executed, are configured to cause at least one computing device to receive a production order for a product to be produced using human resources, machine resources, and inventory materials, and subject to a production deadline. The instructions, when executed, are further configured to cause at least one computing device to retrieve, from a human resources database in which individual human resources are characterized based on skill level, efficiency level, cost, and schedule availability, at least one human resource sufficient to fulfill the production order. The instructions, when executed, are further configured to cause at least one computing device to retrieve, from a machine resources database in which individual machine resources are characterized based on production level, machine availability, and cost, at least one machine resource sufficient to fulfill the production order. The instructions, when executed, are further configured to cause at least one computing device to retrieve, from an inventory database in which inventory materials are characterized based on inventory availability and cost, sufficient inventory materials to fulfill the production order. The instructions, when executed, are further configured to cause at least one computing device to execute a linear programming model to define a production schedule using at least one selected human resource selected from the at least one human resource, at least one selected machine resource from the at least one machine resource, and selected inventory materials from the sufficient inventory materials to complete the production order by the production deadline.

According to another general aspect, a method includes receiving a production order for a product to be produced using human resources, machine resources, and inventory materials, and subject to a production deadline. The method includes retrieving, from a human resources database in which individual human resources are characterized based on skill level, efficiency level, cost, and schedule availability, at least one human resource sufficient to fulfill the production order. The method includes retrieving, from a machine resources database in which individual machine resources are characterized based on production level, machine availability, and cost, at least one machine resource sufficient to fulfill the production order. The method includes retrieving, from an inventory database in which inventory materials are characterized based on inventory availability and cost, sufficient inventory materials to fulfill the production order. The method includes executing a linear programming model to define a production schedule using at least one selected human resource selected from the at least one human resource, at least one selected machine resource from the at least one machine resource, and selected inventory materials from the sufficient inventory materials to complete the production order by the production deadline.

According to another general aspect, a system includes means for receiving a production order for a product to be produced using human resources, machine resources, and inventory materials, and subject to a production deadline. The system includes means for retrieving, from a human resources database in which individual human resources are characterized based on skill level, efficiency level, cost, and schedule availability, at least one human resource sufficient to fulfill the production order. The system includes means for retrieving, from a machine resources database in which individual machine resources are characterized based on production level, machine availability, and cost, at least one machine resource sufficient to fulfill the production order. The system includes means for retrieving, from an inventory database in which inventory materials are characterized based on inventory availability and cost, sufficient inventory materials to fulfill the production order. The system includes means for executing a linear programming model to define a production schedule using at least one selected human resource selected from the at least one human resource, at least one selected machine resource from the at least one machine resource, and selected inventory materials from the sufficient inventory materials to complete the production order by the production deadline.

The details of one or more implementations are set forth in the accompanying drawings and the description below. Other features will be apparent from the description and drawings, and from the claims.

## BRIEF DESCRIPTION OF THE DRAWINGS

FIG. 1 is a block diagram of a system for data analysis for predictive scheduling optimization for product production.
FIG. 2 is a flowchart illustrating example implementations of the system of FIG. 1.
FIG. 3 is a flowchart illustrating more detailed example operations of the system of FIG. 1.
FIG. 4 is a flowchart illustrating more detailed example operations of the schedule optimization of FIG. 3.

## DETAILED DESCRIPTION

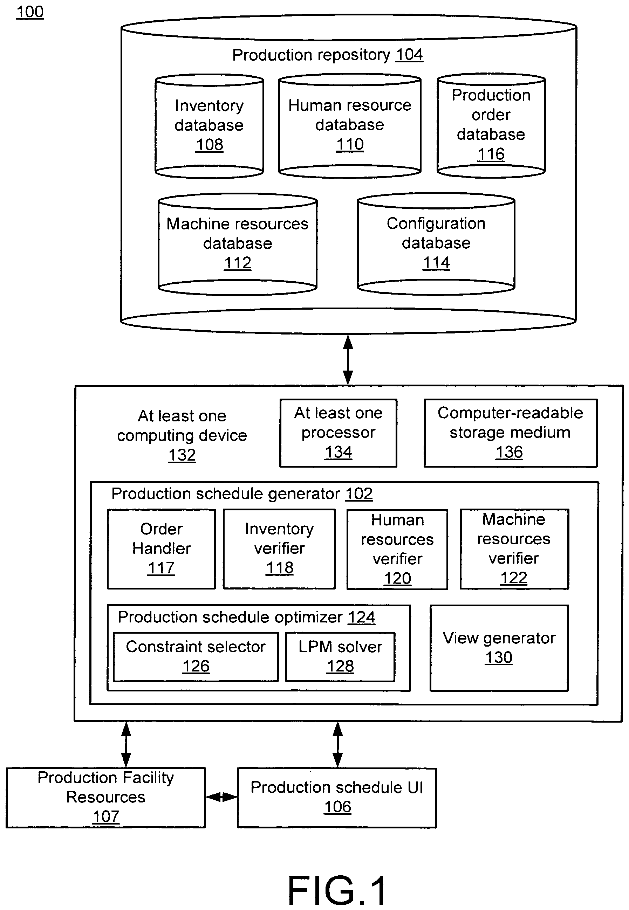

FIG. 1 is a block diagram of a system 100 for a data analysis for predictive scheduling optimization for product production. As referenced above, the system 100 includes a production schedule generator 102 that is configured to access and analyze various types of data from one or more databases represented by a production repository 104, in order to generate a production schedule that optimizes use of available production resources. In example implementations, the resulting, optimized production schedule may be provided to the user of the system 100 by way of a production schedule user interface (UI) 106, which also may be used to parameterize or otherwise configure use of the production schedule generator 102. In additional or alternative example implementations, the production schedule generator 102 and/or the production schedule UI 106 may be utilized to directly configure operations or use of various production facility resources 107 within a production facility.

In more detail, it is assumed for the example of FIG. 1 that the production facility resources 107 generally represent a plurality of types of resources that may be available and utilized within one or more production facilities for the purpose of manufacturing one or more products for sale. For example, the production facility resources 107 may include various types of machine resources for assembling, manufacturing, modifying, or otherwise producing individual items for sale.

It will be appreciated that a listing of all such types of products for sale, and associated production methods therefore, would be beyond the scope of the present description. However, for purposes of the example of FIG. 1, example products may include virtually all types of consumer goods, so that associated machine resources may include virtually all types of machines that may be utilized for, e.g., assembling, painting, moving, heating/curing, or otherwise producing such consumer goods. Again by way of non-limiting example, such consumer goods may include consumer electronics (such as computers or Smartphones), toys, clothing, automobiles, or household goods.

In order to execute such production processing, the various machine resources may be scheduled and operated according to a defined workflow. For instance, in a simplified example, a portion of a consumer good being produced may be painted at a first machine, transported by a second machine to another location, and assembled together with a second portion of the consumer good at a third machine. In practice, each such machine will have a finite capacity for performing its respective function, and will therefore have availability constraints, as well.

In many cases, individual machines may be configured for automated operation by the production schedule generator 102 and/or the production schedule UI 106. In many cases, however, during at least some portions of the production workflow, human resources will be required, as well. In practice, individual employees or other human resources will have widely-varying and heterogeneous skill sets and efficiency levels. Accordingly, as with the machine resources, the human resources will have associated production and availability constraints.

Further with regard to the production facility resources 107, it is assumed that the one or more associated production facilities have access to raw materials and other inventory resources that are to be used during the production workflow. Of course, the various types of inventory materials will vary widely in accordance with the type of production underway. In general, however, it is assumed that all relevant inventory materials are available for obtaining, accessing, or using by an assigned machine resource or human resource. Of course, availability constraints will also exist with regard to a timing and manner in which specific, desired inventory materials may be identified, retrieved, and deployed for processing using the various assigned machine resources and human resources.

In the example of FIG. 1, as already referenced, the production repository 104 is configured to store various types of data related at least to the just-described machine resources, human resources, and inventory materials. For example, as shown, the production repository 104 includes an inventory database 108. The inventory database 108 generally includes various types of information characterizing characteristics of specific inventory materials, as well as information characterizing an availability and use thereof. For example, as described in more detail below, the inventory database 108 may include a current quantity of each available component or other raw material, in the amount of time required to obtain and utilize each of the various types of raw material, and a price level of each component or other raw material.

Further in FIG. 1, a human resource database 110 may be configured to store an availability, salary, skill set, and efficiency level of each employee or other human resource. A machine resource database 112 may be configured to store a current and future availability of individual machine resources, as well as associated operational costs and other configuration parameters for each machine resource.

A configuration database 114 stores various configuration parameters for operations of the system 100. For example, as described in more detail below, the production schedule UI 106 may be configured to permit parameterization or other configuration of the production schedule generator 102, such as when configuring production optimization operations of the production schedule generator 102. The configuration database 114 also may store configuration details for operations and current configurations of the various machine resources, as well.

Finally with respect to the production repository 104, a production order database 116 may be utilized to store specific order information that has been received from customers or other order sources. For example, as described in more detail below, such production orders may include a required quantity of produced goods, a start time and deadline of each order, and other order parameters specified by the customer. In some implementations, the production order database 116 may be utilized to store various production characteristics associated with use of the production facility resources 107 in producing the order in question, such as production dependencies, required raw materials, and anticipated revenue for the order in question.

In the example of FIG. 1, the production repository 104 is illustrated as including the various types of just-described databases 108-116. Of course, in practice, there will be many different ways to configure the various types of data. For example, two or more of the various databases 108-116 may be stored together in some implementations, while in other implementations, two or more of the various databases 108-116 may be stored separately and accessed over appropriate network resources by the production schedule generator 102.

In some implementations, two or more of the various databases 108-116 may be partially or completely combined, and/or data described as being stored using a particular database in the example of FIG. 1 may be partially or completely stored using a different database (for example, production processing details described as being stored in conjunction with a specific production order within the production order database 116 may be stored within the configuration database 114, and accessed therefrom in conjunction one or more corresponding orders).

Further, in some example implementations, the various databases 108-116 illustrated in conjunction with the production repository 104 may be specifically configured for efficient, optimized access by the production schedule generator 102. In other example implementations, however, an advantageous feature of the production schedule generator 102 is the ability to leverage and otherwise utilize existing versions of such databases that are already available in conjunction with operations of the production facility resources 107. As referenced above and described in detail below, however, such existing data is often voluminous in nature, and not amenable or suitable for use in optimizing production schedules. In the example of FIG. 1, however, the production schedule generator 102 is configured to aggregate the various types of data required for production processing of one or more production orders, in order to perform dynamic production scheduling that is optimized, even in the presence of heterogeneous skill sets and efficiency levels of human resources and other variables inherent to the system 100.

For example, as shown in FIG. 1, the production schedule generator 102 may include an order handler 117 that is configured to access the production order database 116 and retrieve associated production order data for one or more received orders. As may be appreciated from the above description of the production order database 116, the order handler 117 may retrieve, for example, a quantity of products being ordered, a start time and deadline for the production thereof, associated price/cost details, and any associated production details or requirements.

An inventory verifier 118 may be configured to parse the retrieved order and thereby obtain any included data related to inventory resources. For example, the inventory verifier 118 may retrieve a quantity of raw materials necessary to complete the production of the product in question. The inventory verifier 118 may then access the inventory database 108 to verify both a presence and availability of the required raw materials.

Similarly, a human resources verifier 120 may be configured to parse the retrieved order from the order handler 117, and access the human resource database 110 to verify a presence and availability of human resources to be utilized in executing the production order in question. In practice, as described in detail below, it may be necessary for the human resources verifier 120 to first analyze the production order in question to determine potential types or other characteristics of human resources that may be utilized (e.g., specific skill sets).

A machine resources verifier 122 may be configured to analyze the production order in question and determine, from accessing the machine resources database 112, whether a required set of machine resources will be available for use in executing the specified production. In practice, as with the inventory verifier 118 and the human resources verifier 120, machine resources verifier 122 may be required to analyze data within the retrieved production order to infer or otherwise determine which types of machine resources, or which specific machines, may be utilized to facilitate the requested production.

Once the verifiers 118-122 have confirmed availability of the various associated resources, a production schedule optimizer 124 may be configured to generate optimized production schedules for one or more production orders being considered. As referenced above, the production schedule optimizer 124 provides a number of advantageous features that consider the reality that production processes as described herein, including various types of labor-intensive manufacturing, often require a variety of different production steps, where each such production step often requires employees or other human resources having existing skill sets and efficiency levels. Moreover, each of the employees may have more than one skill, and may have different efficiency levels for each such skill. The production schedule optimizer 124 enables dynamic allocation of such employees to different production steps at different times, to thereby positively influence an overall production efficiency, and associated profit.

As described in more detail below, the production schedule optimizer 124 generates such optimized production schedules even in context in which the various employee skill sets and efficiency levels are dynamically changing, such as when employees receive additional training or experience over time. Further, in practice, a number of available employees may change over time, such as when employees temporarily or permanently depart, or when new employees are hired or assigned. Further, the production schedule optimizer 124 is able to account for the fact that machine resources and inventory resources used in each production step may be different, while, similarly, capacities of the machine resources may vary over time (e.g., due to machine maintenance), and inventory resources may also vary over time (e.g., due to previous orders being fulfilled, or new inventory resources being received).

In additional examples of dynamic and complex aspects of the environment of the system 100 of FIG. 1, it may occur that prices of raw materials or other inventory resources may fluctuate over time. Further, dependencies in the various production steps may exist, and may change over time, such as when a given production step depends on results of one or more preceding production steps.

Nonetheless, as described herein, the production schedule optimizer 124 is configured to generate optimized production schedules, even when the associated data being processed is voluminous and frequently or dynamically changing over time. In this context, it will be appreciated that optimization refers to a process by which one or more objective functions and associated constraints related to the production environment of the system 100 of FIG. 1 are processed, and a solution space of potential production schedules is explored.

The optimization process thus refers to such exploration of the solution space to identify a best-known or best-identifiable production schedule, which may, but is not required to be, the single best production schedule for the production order in question. In other words, the production schedule optimizer 124 is configured to provide a desired tradeoff between an amount of time spent exploring the solution space, relative to a desired level of certainty that a resulting production schedule represents a single best production schedule. Instead, the production schedule optimizer 124 is designed to provide an optimized production schedule within a timeframe, and having an efficiency and profit level, that would be beyond an ability of the human user of the production repository 104 to obtain with any realistic or feasible level of confidence and reliability within a similar timeframe, while avoiding production schedules that may lead to production order failures or other inefficiencies in the production processes.

In operation, the production schedule optimizer 124 utilizes a constraint selector 126 that is configured to define and utilize a plurality of production constraints relevant to the inventory/human/machine resources being used, and relevant to the production order being processed. Such constraints may thus vary based on a type of production order being considered, or other variables associated with the available resources, where corresponding configuration details characterizing the different types of constraints, and uses thereof, may be specified within the configuration database 114.

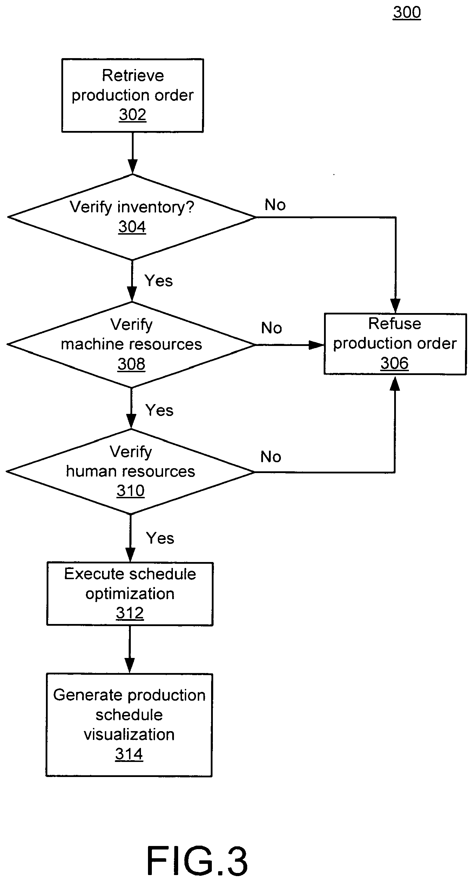

In the example of FIG. 1, a linear programming model (LPM) solver 128 is configured to process the parameterized objective function and associated constraints using associated LPM techniques, as described in detail below with respect to FIG. 3. In general, the LPM solver 128 utilizes the objective function to define an entire solution space of potential production schedules, and then systematically applies the constraints obtained from the constraint selector 126 to confine the solution space, and thereafter explore the constrained solution space to obtain an optimized production schedule.

Although the examples of FIGS. 1 and 3 illustrate and describe the use of the LPM solver 128, it will be appreciated that additional or alternative techniques may be used. For example, the production schedule optimizer 124 may be configured to use additional or alternative optimization algorithms, such as a genetic algorithm.

Further in FIG. 1, a view generator 130 is illustrated, and may be configured to provide the production schedule UI 106. For example, as described, the view generator 130 may be configured to provide the production schedule UI 106 for purposes of configuring the production schedule optimizer 124, or any of the verifiers 118-122. Further, the view generator 130 may be configured to provide various visualizations of the one or more optimized production schedules generated by the production schedule optimizer 124.

For example, the production schedule UI 106 may provide visualizations of multiple production schedules, to thereby allow selection therefrom by the user of the production schedule UI 106. As referenced, the production schedule UI 106 may further enable automatic or manual selection of a single production schedule, and thereafter automatically schedule and operate relevant machine resources to conduct specific production steps in accordance with the optimized production schedule. Similarly, with respect to specific, individual employees or other human resources, the production schedule UI 106, or the production schedule optimizer 124 itself, may be configured to generate individual work schedules to be transmitted to corresponding individuals to thereby communicate a timing and nature of tasks to be performed.

In terms of the solution space explored by the production schedule optimizer 124, it will be appreciated that many different options for, and combinations of, the various inventory/human/machine resources may exist, thereby enlarging the viable solution space to be explored. For example, with reference back to verification processes of the various verifiers 118-122, it will be appreciated that each of the verifiers 118-122 is configured to analyze a production order being considered, along with associated data, to determine which data to retrieve from corresponding databases 108-112.

For example, with respect to inventory resources, the inventory verifier 118 may determine that two or more types of raw materials may be suitable for the production order in question. The inventory verifier 118 also may determine that one or more types of inventory resources are available from different locations or other sources, or may be available at different price levels, perhaps dependent upon a number or quantity of raw materials being used.

Similarly, the human resources verifier 120 may be required to deduce from the production order in question a range of skill sets and efficiency levels of human resources that may be suitable for the production order. For example, the human resources verifier 120 may determine that an employee with a low efficiency level and low salary may represent a possible solution, along with another employee having a higher salary but corresponding higher efficiency level. Again, it may occur that a large number of employees having such ranges of skill sets, efficiency levels, and associated costs (e.g., salaries) may exist, so that the human resources verifier 120 is configured to identify all such relevant ranges, to thereby enable the production schedule optimizer 124 to consider various combinations thereof, in conjunction with corresponding ranges and combinations of possible solutions obtained with respect to the inventory resources and machine resources.

For example, in the latter context, the machine resources verifier 122 may analyze the production order in question to determine a range of types of machines, or specific machines, that may be suitable for completing the production order. For example, a slower, less-operationally expensive machine may or may not be preferable to a higher cost, higher speed (or higher reliability) machine. Again, the various combinations of such potential solutions, combined with similar combinations obtained by the inventory verifier 118 and the human resources verifier 120, result in a potentially large solution space to be explored by the production schedule optimizer 124.

Finally with respect to FIG. 1, the production schedule generator 102 is illustrated as being executed using at least one computing device 132, which itself includes at least one processor 134 and a non-transitory computer readable storage medium 136. For example, the at least one computing device 132 may represent one or more computing devices configured to implement the production schedule generator 102 by causing the at least one processor 134 to access corresponding instruction stored using the non-transitory computer readable storage medium 136.

Of course, as is apparent, the at least one computing device 132 is intended as a highly simplified representation of the types of computing devices that may be utilized to provide the production schedule generator 102, and therefore does not explicitly illustrate various known hardware/software components that may be utilized in the various implementations of the system 100. For example, the at least one computing device 132 does not explicitly illustrate, but would include, a monitor or other appropriate display device for providing the production schedule UI 106, network-related hardware/software for enabling network communications between the various components of the production schedule generator 102, as needed, and between the various databases of the production repository 104, and various other input/output and other human interface components.

For example, two or more computing devices, or one or more computing devices having two or more processors each, may execute individual components of the production schedule generator 102, perhaps in parallel. For example, the various operations of the verifiers 118-122 may be conducted in a partially or completely overlapping or parallel manner.

Further, although the production schedule generator 102 is illustrated as including a number of separate, discrete components, it will be appreciated that any two or more components or sub-components may be combined for operation of the single component, while, conversely, a single component may be operated as two or more separate sub-components. For example, some or all of the verification functions of the verifiers 118-122 may be combined, while the view generation operations of the view generator 132 may be separated and performed partially at both of a server and client computer. In another example, the LPM solver 128 may be implemented separately from the production schedule optimizer 124, or from the production schedule generator 102.

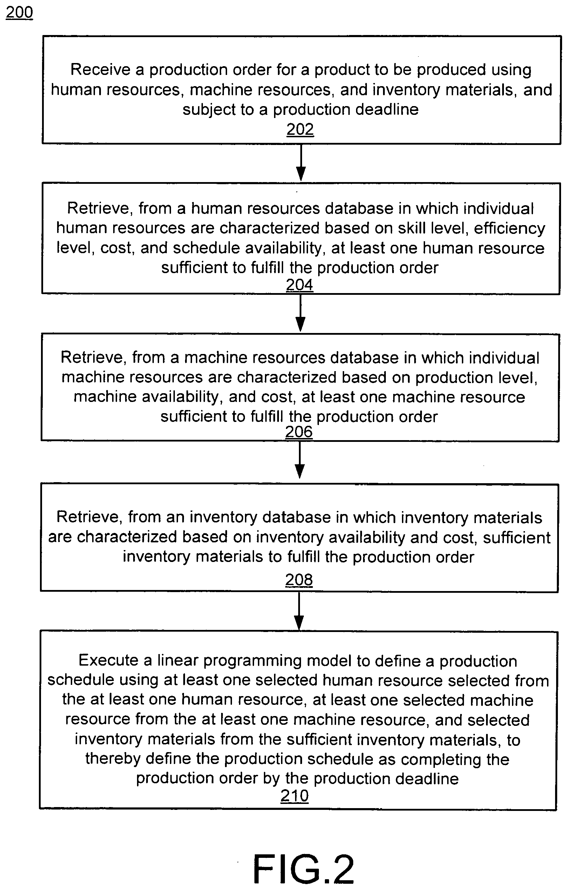

FIG. 2 is a flowchart 200 illustrating example operations of the system 100 of FIG. 1. In the example of FIG. 2, operations 202-210 are illustrated as separate, sequential operations. In various implementations, additional or alternative operations or sub-operations may be included, and/or one or more operations or sub-operations may be omitted. In all such implementations, any two or more operations or sub-operations may be executed in a partially or completely overlapping or parallel manner, or in a nested, iterative, looped, or branched fashion.

In the example of FIG. 2, a production order for a product to be produced using human resources, machine resources, and inventory materials, and subject to a production deadline, may be received (202). For example, the order handler 117 may retrieve such a production order from the production order database 116. In other implementations, the order handler 117 may receive a production order directly from a customer system, perhaps in conjunction with a storage of the production order within the production order database 116.

From a human resources database in which individual human resources are characterized based on skill level, efficiency level, cost, and schedule availability, at least one human resource sufficient to fulfill the production order may be retrieved (204). For example, the human resources verifier 120 may access the human resource database 110 to verify and identify sufficient human resources for the received production order.

From a machine resources database in which individual machine resources are characterized based on production level, machine availability, and cost, at least one machine resource sufficient to fulfill the production order may be retrieved (206). For example, the machine resource verifier 122 may access the machine resources database 112, based on an analysis of the received production order, to thereby retrieve individual machines that individually or collectively represent potential options for executing the production order.

From an inventory database in which inventory materials are characterized based on inventory availability and cost, sufficient inventory materials to fulfill the production order may be retrieved (208). For example, the inventory verifier 118 may analyze the production order and access the inventory database 108 to ensure that sufficient inventory materials are available for the production workflow being scheduled.

Finally in the example of FIG. 2, a linear programming model is executed to define a production schedule using at least one selected human resource selected from the at least one human resource, at least one selected machine resource from the at least one machine resource, and selected inventory materials from the sufficient inventory materials, to thereby define the production schedule as completing the production order by the production deadline (210). For example, the production schedule optimizer 124 may be configured to utilize all resource-related data obtained by the verifiers 118, 122, to thereby generate the optimized production schedule.

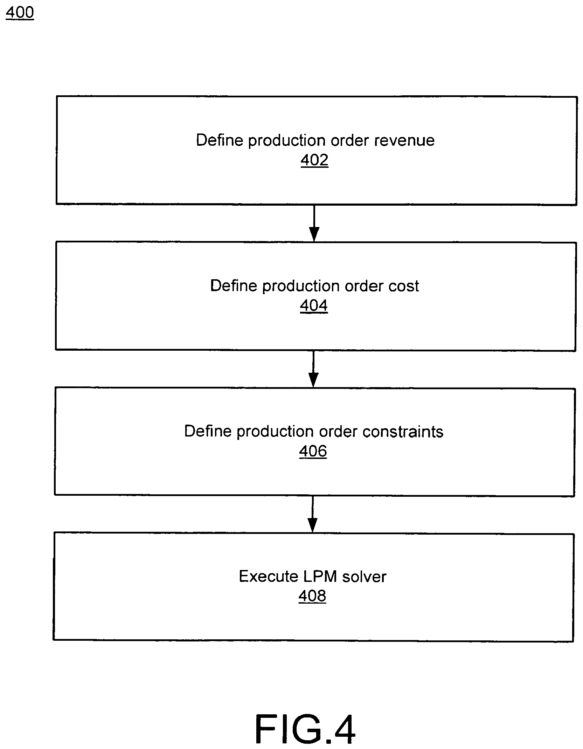

As referenced above, FIGS. 3 and 4 are flowcharts illustrating more detailed example implementations of the system of FIG. 1 and the flowchart 200 of FIG. 2. More specifically, as described in detail below, in the example of FIGS. 3 and 4, the production schedule optimizer 124 utilizes an objective function for optimizing resulting production schedules in terms of profit obtained from the production orders being processed. As would be appreciated, the described examples are non-limiting, and other objective functions and optimization parameters may be used. For example, optimization may be performed with respect to completing production orders as quickly as possible, or with as high a quality as possible, or on other additional or alternative criteria.

In the example of FIG. 3, at least one production order is retrieved from the production order database 116 (302). For example, the order handler 117 may retrieve multiple production orders, from one or more customers. In this way, operations of the production schedule generator 102 may be optimized across a range of different production orders.

The inventory verifier 118 may then verify inventory resources (304). As described, the inventory verifier 118 may parse the one or more retrieved production orders and determine required inventory resources. For example, if the order specifies a number of products to be manufactured, the inventory verifier 118 may first determine a number and type of each component used in the manufacturing process for manufacturing an individual product. The inventory verifier 118 may then access the inventory database 108 and perform a comparison of the determined quantities of components or other raw materials specified in the one or more orders with the quantity of available or obtainable inventory corresponding thereto within the inventory database 108.

As shown, if the inventory verifier 118 is not able to verify sufficient inventory resources, then the production order may be refused (306). In other implementations, it may not be necessary to refuse the production order. Instead, for example, the order handler 117 may be configured to communicate with the corresponding customer and offer delivery at a later deadline, perhaps at a lower price, or otherwise provide accommodations in exchange for fulfilling the order in a different manner and/or at a different time than originally specified in the production order as received.

The machine resource verifier 122 may also examine the production order and verify that sufficient machine resources are available to fulfill the production order (308). For example, again, the machine resource verifier 122 may be required to analyze the product requested in the production order, along with the inventory materials identified by the inventory verifier 118, in order to determine possible machine resources that would be required to fulfill the production order. That is, as described, the machine resource verifier 122 may determine all options for machine resources that will have sufficient availability and capacity within the specified timeframe, possibly including some machine resources having different features and advantages/disadvantages than other machine resources. As with the inventory verification, if the machine resource verification fails, the production order may be refused (306), or otherwise responded to.

The human resource verifier 120 may then be configured to verify sufficient human resources to satisfy the production order (310). For example, the human resource verifier 120 may analyze the various components and raw materials identified by the inventory verifier, as well as the identified machine resources identified by the machine resource verifier 122, and may calculate or otherwise determine potential human resources for fulfilling the production order. For example, if the human resource verifier 120 identifies a particular machine specified by the machine resource verifier 122, then the human resource verifier 120 will analyze the human resource database 110 to select employees who are qualified or otherwise rated for operating the machine in question. As described, the human resource verifier 120 may be configured to retrieve all human resources from the human resource database 110, across a range of skill sets and efficiency levels, to select all possible human resource options for purposes of verifying an ability to satisfy the production order in question. If such verification cannot be completed, then the production order may be refused (306), or otherwise responded to.

If the various verification operations 304, 308, 310 are successfully completed, then schedule optimization may be executed (312). That is, the various verification operations 304, 308, 310 may be executed for the purpose of verifying a possibility of fulfilling the one or more production orders in question, and generally without regard for a relative advisability or desirability of doing so. On the other hand, in the example of FIG. 3, the executed schedule optimization provides decision-making support for determining techniques, including production schedules, for fulfilling the production order in a manner that satisfies relevant constraints, and meets thresholds required for completing the production order, such as profitability, timeliness, or quality.

In operation, the production schedule optimizer 124 thus accesses the configuration database 114 to determine one or more objective functions to be optimized, along with relevant constraints for executing the optimization, e.g., using an enhanced linear programming model. That is, as referenced above, the constraint selector 126 may be used to configure and select applicable constraints, while the LPM solver 128 may be used to execute the enhanced linear programming model. For example, solvers such as SoPlex (Sequential object-oriented simplex) package, the LP Solver in the HANA in-memory database of SAP SE of Walldorf, Germany, or the R lpsolver package. More detailed operations of the production schedule optimizer 124 are illustrated and described below, with respect to FIG. 4.

The production schedule visualization may then be generated (314), such as when the view generator 130 generates the production schedule UI 106. For example, the production schedule UI 106 may be configured to illustrate a number of potential production schedules and associated details, from which a user of the system 100 may select a desired production schedule. Of course, the user also may utilize the production schedule UI 106 to make modifications to a generated production schedule, as well as to implement actual operational scheduling within the production facility of the production facility resources 107.

In the example of FIG. 4, Table 1 provides example notations and corresponding definitions that may be useful for understanding example schedule optimization operations. Additionally, where necessary or helpful, individual ones of the notations of Table 1 are described and explained in more detail in conjunction with associated operations of the production schedule generator 102.

**Table 1**

| Notation | Definition |
|---|---|
| $X_i$ | The quantity of production of order $i$ |
| $D_i$ | The deadline of order $i$ |
| $UP_i$ | The unit price of product in order $i$ |
| $T_j$ | A planning period |

(continued)

| Notation | Definition |
|---|---|
| $X_{ii}$ | The quantity of production at planning period j for order $i$ |
| $Z_{ijt}$ | The quantity of production at planning period $j$ for step $t$ of order $i$ |
| $RRM_{ijt}$ | The required quantity of raw material at planning period j for step $t$ (per production unit) |
| $RMA_{ijt}$ | The required quantity of machine resource at planning period $j$ for step $t$ (per production unit) |
| $RHU_{ijtls}$ | The required quantity of human resource with skill $s$ and efficiency level $l$ at planning period $j$ for step $t$ (per production unit) |
| $RM_{jt}$ | The total quantity of additional raw material at planning period j for step $t$ |
| $MA_{jt}$ | The total quantity of available machine resource at planning period $j$ for step $t$ |
| $HU_{jtl}$ | The total quantity of available human resources with efficiency level $l$ at planning period $j$ for step $t$ |
| $CRM_{jt}$ | The price of raw material in step t at planning period $j$ |
| $CMA_{jt}$ | The price of machine in step $t$ at planning period $j$ |
| $CHU_{jtls}$ | The price of human resource with skill s and efficiency level $l$ in step t at planning period $j$ |

As just referenced, FIG. 4 is a flowchart 400 illustrating more detailed example operations of the production schedule optimizer 124 of FIG. 1, and of the schedule optimization execution operation (312) of FIG. 3 In the example of FIG. 4, the notation of Table 1 is used to formulate an objective function in which schedule optimization is executed based on a maximization of business profit. As referenced above, other objectives could additionally or alternatively be used, such as production speed, production quality, and/or production reliability.

Nonetheless, in the example of maximizing business profit, the objective function may be written using the notation of Table 1 and a definition of profit as being equivalent to revenue minus cost. Accordingly, revenue can be defined as illustrated below in Equation 1:

$$Revenue = \sum_i UP_i \times \sum_j \sum_t Z_{ijt}$$

### Equation 1

As shown in Equation 1, the unit price of a product specified in a production order "I," specified as $UP_i$, may be summed over all orders, to obtain a revenue. Then, a quantity of production over a planning period "j" for a step "t" of a production process for the order "i" may be calculated. In other words, as shown in Equation 1, the production quantity may be summed over a number of planning periods and production steps associated with a given order, and then added to an aggregated unit price for the products being sold to obtain a total revenue. In practice, an amount for revenue may also be obtained from the production order database 116.

In terms of cost, production costs may be considered to include a human resource cost (e.g., salaries or other costs associated with the deploying human resources), machine operational costs (including fuel/power costs, and maintenance costs), and costs associated with obtaining and utilizing inventory resources. Thus, a total cost may be obtained as the sum of the above three costs, as illustrated in the example of Equation 2:

$$Cost = \sum_i \sum_j \sum_t Z_{ijt} \times (RRM_{ijt} \times CRM_{jt} + RMA_{ijt} \times CMA_{jt} + \sum_s \sum_l RHU_{ijtls} \times CHU_{jtls})$$

### Equation 2

As shown, the costs may be obtained by calculating the required quantity of raw materials at a planning period "j" for step "t" for a given order "i," as represented by $RRM_{ijt}$. A price of raw materials at step "t" and planning period "j" is represented as $CRM_{jt}$. A required quantity of machine resources at a planning period "j" for a step "t" is represented as $RMA_{ijt}$. A price of a specific machine used in a step "t" in a planning period "j" is represented as CMAjt.

Further in Equation 2, the parameter $RHU_{ijtls}$ represents a required quantity of human resources, in which each individual possesses a skill "s," with efficiency level "l" to be deployed in planning period "j" for each step "t." Further, a parameter $CHU_{jtls}$ represents a price of human resources in which individual human resources have skill level "s" and efficiency level "l" within each step "t" of a planning period "j." In other words, Equation 2 takes into account the fact that human resources having different skill sets and efficiency levels will also typically have different salary levels, and thus includes all the different combinations and possibilities for human/machine/inventory resources to be used. As with equation 1, the various costs are also aggregated over a total number or quantity of production, $Z_{ijt}$.

As referenced above, the production schedule optimizer 124 thus establishes a production order revenue (402), as illustrated and described with respect to Equation 1, while also defining a production order cost (404), as defined with respect to equation 2.

Subsequently, the constraint selector 126 may be utilized to configure relevant constraints (406), or to obtain relevant constraints from the configuration database 114, if available. For example, as shown in Equation 3, one constraint is that the production order must be finished before a specified deadline:

$$\forall i: \sum_j Z_{ijT} < X_i;$$

Equation 3

As illustrated in Equation 3, a total production quantity within a planning period should be less than the total production quantity of the order "i" in question.

Equation 4 specifies a constraint that production quantities must be greater than or equal to 0:

$$\forall i, \forall j, \forall t: Z_{jt} \geq 0;$$

**Equation 4**

In other words, from a strictly mathematical perspective, the objective function of equations 1 and 2 may be satisfied using average production values in which a negative number of units are produced in a given day. However, while such a result is mathematically feasible, it is not possible to produce a negative number of products in real-world situations. Consequently, as shown, Equation 4 illustrates that the total quantity of production over a planning period "j" and step "t" for an order "i" must be greater than or equal to 0.

The following equations 5, 6, 7 relate to capacity constraints. Specifically, Equation 5 illustrates a capacity constraint specifying that the machine used in each step must not exceed an available capacity. That is, as shown, the required quantity of machine resources at planning period "j" for step "t" of $RMA_{iJt}$ must be less than or equal to to a quantity of available machine resource at the planning period "j" for the step "t," as aggregated over the total order or orders.

$$\forall j, \forall t: \sum_i RRM_{ijt} \leq RM_{jt}$$

**Equation 5**

Similarly, an amount of raw materials using each step should not exceed an available capacity in that step. As shown in equation 6, the required quantity of raw materials at a planning period "j" for a step "t," represented as $RRM_{ijt}$ must be less than or equal to a total quantity of additional raw materials available at planning period "j" for step "t," represented as $RM_{jt}$.

$$\forall j, \forall t: \sum_i RMA_{ijt} \leq MA_{jt}$$

Equation 6

For human resources, a number of employees with skill set "s" and efficiency level "l" must be less than or equal to a capacity of each employee in a given production step, as shown in Equation 7:

$$for\ each\ s\ and\ l\ and\ \forall j, \forall t: \sum_i RHU_{ijtl} \leq HU_{jtl}$$

**Equation 7**

Production dependencies may require fitting dependencies in order, as shown in Equation 8:

$$\forall i, \forall j, \forall t: Z_{ijt} \leq Z_{i,j-1,t-1} + Z_{i,j,t-1};$$

$$\forall i, \forall j > D_i: Z_{ijt} = 0;$$

Equation 8

In some scenarios, it may occur that, despite calculation of a production schedule as described above, unpredicted or unpredictable occurrences may disrupt the optimized production schedule. For example, employees may be ill, injured, or otherwise unavailable, or machine resources may malfunction.

Therefore, in other advantageous features of the system 100 of FIG. 1, the production schedule generator 102 may be configured to calculate a resource buffer to guard against loss of production in such scenarios. For example, the human resources verifier 120 may be configured to verify human resources exceeding above a minimum, e.g., at 10% above a minimum. More specifically, for example, the human resources verifier 120 may verify human resources having specific skill sets, availability, or cost that would be compatible with the calculated, optimized production schedule. Similar comments apply to verifications performed with respect to machine resources, and/or inventory resources.

For example, if 100 employees are available and 90 are required for a particular production schedule, then the 10 remaining may be idle or assigned to a lower-priority task. If a number of the 90 assigned employees is reduced over time during the production run (e.g., due to employee sick days, vacations, injury, or other departure or unavailability), the view generator may display a warning. If the number goes below 90, the production schedule generator 102 may re-optimize the production schedule using some or all of the designated 10 employees. Similar approaches may be used with respect to machine and inventory resources.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the embodiments.

**Claims**

1.  A computer program product, the computer program product being tangibly embodied on a non-transitory computer-readable storage medium and comprising instructions that, when executed, are configured to cause at least one computing device to:

    receive a production order for a product to be produced using human resources, machine resources, and inventory materials, and subject to a production deadline;
    retrieve, from a human resources database in which individual human resources are characterized based on skill level, efficiency level, cost, and schedule availability, at least one human resource sufficient to fulfill the production order;
    retrieve, from a machine resources database in which individual machine resources are characterized based on production level, machine availability, and cost, at least one machine resource sufficient to fulfill the production order;
    retrieve, from an inventory database in which inventory materials are characterized based on inventory availability and cost, sufficient inventory materials to fulfill the production order; and
    execute a linear programming model to define a production schedule using at least one selected human resource selected from the at least one human resource, at least one selected machine resource from the at least one machine resource, and selected inventory materials from the sufficient inventory materials to complete the production order by the production deadline.

2.  The computer program product of claim 1, wherein the instructions, when executed by the at least one computing device, are further configured to:

    execute the linear programming model including maximizing an objective function defining a profit associated with the production schedule; or
    execute the linear programming model including defining a plurality of production constraints; including the production deadline; and solve the linear programming model, based on the constraints.

3.  The computer program product of any of the preceding claims,
    wherein the efficiency level, cost, and schedule availability retrieved from the human resources database are used to define the plurality of production constraints; or

wherein the production level, machine availability, and cost retrieved from the machine resources database are used to define the plurality of production constraints.

4. The computer program product of claim 1 or 2,
   wherein the inventory availability and cost retrieved from the inventory resources database are used to define the plurality of production constraints.

5. The computer program product of any of the preceding claims, wherein the production constraints include compliance with a production dependency of operations in the production schedule

6. The computer program product of any of the preceding claims, wherein the instructions, when executed by the at least one computing device, are further configured to:

   determine an availability of a buffer of available but unassigned human resources, machine resources, and/or inventory materials;
   determine that the current production schedule will have insufficient human resources, machine resources, and/or inventory materials, due to a reduction thereof following the defining of the production schedule; and
   re-execute the linear programming model to provide an updated production schedule, using the buffer.

7. A method comprising:

   receiving a production order for a product to be produced using human resources, machine resources, and inventory materials, and subject to a production deadline;
   retrieving, from a human resources database in which individual human resources are characterized based on skill level, efficiency level, cost, and schedule availability, at least one human resource sufficient to fulfill the production order;
   retrieving, from a machine resources database in which individual machine resources are characterized based on production level, machine availability, and cost, at least one machine resource sufficient to fulfill the production order;
   retrieving, from an inventory database in which inventory materials are characterized based on inventory availability and cost, sufficient inventory materials to fulfill the production order; and
   executing a linear programming model to define a production schedule using at least one selected human resource selected from the at least one human resource, at least one selected machine resource from the at least one machine resource, and selected inventory materials from the sufficient inventory materials to complete the production order by the production deadline.

8. The method of claim 7, further comprising:

   executing the linear programming model including maximizing an objective function defining a profit associated with the production schedule; or
   execute the linear programming model including defining a plurality of production constraints; including the production deadline; and solve the linear programming model, based on the constraints.

9. The method of claim 7 or 8,
   wherein the efficiency level, cost, and schedule availability retrieved from the human resources database are used to define the plurality of production constraints; or
   wherein the production level, machine availability, and cost retrieved from the machine resources database are used to define the plurality of production constraints.

10. The method of claim 7 or 8,
    wherein the inventory availability and cost retrieved from the inventory resources database are used to define the plurality of production constraints.

11. The method of any of claims 7 to 10, wherein the production constraints include compliance with a production dependency of operations in the production schedule.

12. The method of any of claims 7 to 11, further comprising:

determining an availability of a buffer of available but unassigned human resources, machine resources, and/or inventory materials;

determining that the current production schedule will have insufficient human resources, machine resources, and/or inventory materials, due to a reduction thereof following the defining of the production schedule; and

re-executing the linear programming model to provide an updated production schedule, using the buffer.

**13.** A system comprising:

means for receiving a production order for a product to be produced using human resources, machine resources, and inventory materials, and subject to a production deadline;

means for retrieving, from a human resources database in which individual human resources are characterized based on skill level, efficiency level, cost, and schedule availability, at least one human resource sufficient to fulfill the production order;

means for retrieving, from a machine resources database in which individual machine resources are characterized based on production level, machine availability, and cost, at least one machine resource sufficient to fulfill the production order;

means for retrieving, from an inventory database in which inventory materials are characterized based on inventory availability and cost, sufficient inventory materials to fulfill the production order; and

means for executing a linear programming model to define a production schedule using at least one selected human resource selected from the at least one human resource, at least one selected machine resource from the at least one machine resource, and selected inventory materials from the sufficient inventory materials to complete the production order by the production deadline.

**14.** The system of claim 13, wherein the means for executing the linear programming model includes:

means for executing the linear programming model including maximizing an objective function defining a profit associated with the production schedule.

**15.** The system of claim 13 or 14,
further comprising: means for executing the linear programming model including defining a plurality of production constraints; including the production deadline; and means for solving the linear programming model, based on the constraints; and/or

wherein the production constraints include compliance with a production dependency of operations in the production schedule.

100

Production repository 104

Inventory database 108

Human resource database 110

Production order database 116

Machine resources database 112

Configuration database 114

At least one computing device 132

At least one processor 134

Computer-readable storage medium 136

Production schedule generator 102

Order Handler 117

Inventory verifier 118

Human resources verifier 120

Machine resources verifier 122

Production schedule optimizer 124

Constraint selector 126

LPM solver 128

View generator 130

Production Facility Resources 107

Production schedule UI 106

# FIG.1

200

```
┌─────────────────────────────────────────────────────┐
│   Receive a production order for a product to be     │
│  produced using human resources, machine resources,  │
│   and inventory materials, and subject to a          │
│              production deadline                      │
│                      202                             │
└─────────────────────────────────────────────────────┘
                        │
                        ▼
┌─────────────────────────────────────────────────────┐
│  Retrieve, from a human resources database in which  │
│  individual human resources are characterized based  │
│  on skill level, efficiency level, cost, and         │
│  schedule availability, at least one human resource  │
│         sufficient to fulfill the production order    │
│                      204                             │
└─────────────────────────────────────────────────────┘
                        │
                        ▼
┌─────────────────────────────────────────────────────┐
│ Retrieve, from a machine resources database in which │
│ individual machine resources are characterized based │
│    on production level, machine availability, and    │
│   cost, at least one machine resource sufficient to  │
│              fulfill the production order             │
│                      206                             │
└─────────────────────────────────────────────────────┘
                        │
                        ▼
┌─────────────────────────────────────────────────────┐
│  Retrieve, from an inventory database in which       │
│  inventory materials are characterized based on      │
│  inventory availability and cost, sufficient         │
│  inventory materials to fulfill the production order  │
│                      208                             │
└─────────────────────────────────────────────────────┘
                        │
                        ▼
┌─────────────────────────────────────────────────────┐
│   Execute a linear programming model to define a     │
│ production schedule using at least one selected      │
│ human resource selected from the at least one human  │
│ resource, at least one selected machine resource     │
│ from the at least one machine resource, and selected │
│ inventory materials from the sufficient inventory    │
│ materials, to thereby define the production schedule │
│ as completing the production order by the production │
│                    deadline                          │
│                      210                             │
└─────────────────────────────────────────────────────┘
```

# FIG.2

300

```
          ┌─────────────────┐
          │    Retrieve     │
          │ production order│
          │      302        │
          └─────────────────┘
                   │
                   ▼
          ◇─────────────────◇     No
          ◇ Verify inventory?◇──────────┐
          ◇       304        ◇          │
          ◇─────────────────◇          │
                   │                    │
                  Yes                   │
                   │                    ▼
          ◇─────────────────◇  No  ┌─────────────────┐
          ◇     Verify       ◇─────▶│    Refuse       │
          ◇ machine resources◇     │ production order│
          ◇       308        ◇     │      306        │
          ◇─────────────────◇     └─────────────────┘
                   │                    ▲
                  Yes                   │
                   │                    │
          ◇─────────────────◇  No       │
          ◇     Verify       ◇──────────┘
          ◇ human resources  ◇
          ◇       310        ◇
          ◇─────────────────◇
                   │
                  Yes
                   │
                   ▼
          ┌─────────────────┐
          │ Execute schedule│
          │  optimization   │
          │      312        │
          └─────────────────┘
                   │
                   ▼
          ┌─────────────────┐
          │Generate production│
          │    schedule      │
          │  visualization   │
          │      314         │
          └─────────────────┘
```

# FIG.3

400

```
┌─────────────────────────────────────────────┐
│                                             │
│       Define production order revenue       │
│                    402                       │
│                                             │
└─────────────────────────────────────────────┘
                       │
                       ▼
┌─────────────────────────────────────────────┐
│                                             │
│        Define production order cost          │
│                    404                       │
│                                             │
└─────────────────────────────────────────────┘
                       │
                       ▼
┌─────────────────────────────────────────────┐
│                                             │
│     Define production order constraints      │
│                    406                       │
│                                             │
└─────────────────────────────────────────────┘
                       │
                       ▼
┌─────────────────────────────────────────────┐
│                                             │
│             Execute LPM solver               │
│                    408                       │
│                                             │
└─────────────────────────────────────────────┘
```

# FIG.4

Europäisches
Patentamt

European
Patent Office

Office européen
des brevets

# EUROPEAN SEARCH REPORT

Application Number

EP 16 00 2729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Linear programming - Wikipedia", , 2 December 2015 (2015-12-02), XP055342623, Retrieved from the Internet: URL:https://en.wikipedia.org/w/index.php?title=Linear_programming&oldid=693387686 [retrieved on 2017-02-06] * page 1 * * page 3 - page 4 * | 1-15 | INV. G06Q10/06 |
| X | WO 2005/104401 A2 (UNIV RAMOT [IL]; SHAI OFFER [IL]; RUBIN DANIEL [IL]) 3 November 2005 (2005-11-03) * abstract * * page 3, line 15 - page 3, line 24 * | 1-15 | |
| X | US 2014/031965 A1 (SUN GUFEI [CN] ET AL) 30 January 2014 (2014-01-30) * abstract; figure 1a * * paragraph [0002] - paragraph [0008] * * paragraph [0015] - paragraph [0041] * | 1-15 | |

TECHNICAL FIELDS
SEARCHED (IPC)

G06Q

The present search report has been drawn up for all claims

| Place of search | Date of completion of the search | Examiner |
|---|---|---|
| Munich | 7 February 2017 | Peller, Ingrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 00 2729

This annex lists the patent family members relating to the patent documents cited in  the above-mentioned European search report.
The members are as contained in the European Patent Office EDP file on
The European Patent Office is in no way liable for these particulars which are merely given for the purpose of information.

07-02-2017

| Patent document cited in search report | | Publication date | Patent family member(s) | | Publication date |
|---|---|---|---|---|---|
| WO 2005104401 | A2 | 03-11-2005 | US | 2007244675 A1 | 18-10-2007 |
| | | | WO | 2005104401 A2 | 03-11-2005 |
| US 2014031965 | A1 | 30-01-2014 | NONE | | |

EPO FORM P0459

For more details about this annex : see Official Journal of the European Patent Office, No. 12/82